# EUROPEAN PATENT APPLICATION

(11) **EP 1 239 268 A1**
(43) Date of publication of application: **11.09.2002**
(21) Application number: 02396027.1
(22) Date of filing: 05.03.2002
(51) Int. Cl.: G01G 23/01, G01G 19/414, G01G 17/08, G01G 19/00, G01G 19/56, G01G 19/44, G01G 19/04

(54) **Internet based weighing system**

(30) Priority: 05.03.2001 FI 20010429
(71) Applicant: Tamtron OY, 33561 Tampere (FI)
(72) Inventor: Asikainen, Pentti, 35800 Mänttä (FI)
(74) Representative: Tanhua, Pekka Vilhelm

(57) **Abstract**

The invention relates to a weighing system, comprising a weighing arrangement for providing weighing results, first transceiver means for transmitting the weighing results provided by weighing instruments, and second transceiver means for receiving the weighing results. As a response to receiving the weighing results, a response is transmitted to the weighing arrangement, which comprises for example an acknowledgement confirming receipt of weighing information. In communication regarding transfer of the weighing results, the weighing system most preferably utilizes an information network link based on electromagnetic phenomena.

## Description

The invention relates generally to the determination of the weight of a body, and particularly as set forth in the preamble of claim 1.

In this specification, weighing refers to the determination of a mass effected on the basis of the weight of a body. The device used for effecting a weighing procedure, the weighing appliance, is referred to as a scales and/or also a balance. The determination of the mass of a body can be effected by a multitude of prior known methods, based on the measurement of a force which is oppositely directed, yet equal to the weight of the body. The counter-force can be produced in a plurality of ways, most commonly for example by means of the weight of a known mass, by using a spring and/or electrically.

When an opposite or reverse force is established for example by means of a spring, the latter is generally set in such a way that the weight of a body in the process of weighing applies a modification to the shape of the spring, said modification being measured and displayed by using for example a mechanical scale expressing the magnitude of mass. Hence, the scales is generally provided also with a mechanism capable of making the spring shape modification and its measurement readily readable for a scales operator by using a certain scale.

The beam balance, along with its operating principle, has probably been known for thousands of years in one form or another. It has a freely pivoting beam, which is supported between the ends thereof at a single point, about which the beam is capable of pivoting quite freely. The measuring result is expressed as the amount of variation in mass and/or dimensions required for a balanced condition or as a deviation of the beam from a balanced position.

For sensing the weight, the scales can also be provided with an electrical sensor. In certain cases, the weighing of a body can be based for example on piezoelectric effects.

The way of presenting a weighing result to an appropriate person depends on a display unit provided for the scales. At its simplest, the scales may be provided with a display unit comprising a mechanical arrangement for displaying a mass from a calibrated dial. Prior known are also analysis scales, which are provided with an RS port for transferring weighing results to another device, e.g. to a plotter for producing a printout in recording purposes.

However, in prior known solutions, the weighing results require processing on the part of a weigh master, a scales operator, as well as use of specific instruments for bringing the result to its final mode for application. For example, personal scales and/or baby care scales are prior known devices which display the weighing result to a weigh master who generally records the same, most commonly by means of a pen and paper, whereby the spelling and reading errors affect the reliability of results. Henceforth, the processing of weighing results continues by tapping the results manually in a file etc. In addition, there are special circumstances when the reading of a scales cannot be read directly from the scales display. An example of this are situations which involve working with hazardous materials or even situations encountered when weighing excessively obese people by means of a regular personal scales.

It is an object of the invention to alleviate drawbacks associated with prior known weighing technology and hence to improve the reliability of weighing results. as well as to enhance the immediate applicability thereof.

The invention achieves its objectives by means of an inventive weighing system, wherein information is transferred between the weighing system and memory facilities by using an information network.

A weighing system of the invention is characterized by what is set forth in the characterizing section of claim 1.

A weighing method of the invention is characterized by what is set forth in the characterizing section of claim 12.

A weighing arrangement of the invention is characterized by what is set forth in the characterizing section of claim 16.

The inventive weighing system is provided with weighing instruments for producing a weighing result, transmitter instruments for transmitting a piece of weighing information worked out on the basis of the weighing results, and receiver instruments for receiving the transmitted piece of weighing information. Most preferably, communication regarding the weighing information of a weighing system proceeds over a data network by using a communication link implemented by means of signals based on electromagnetic phenomena. The weighing system includes most preferably also memory facilities for recording the weighing results in a memory, which is located in such a section of the weighing system which can be means integrated with the system also by way of the data network.

The weighing instruments included in a weighing arrangement for the inventive weighing system are most preferably electromechanical, comprising both mechanical and electrical components. The weighing instruments include for example weight sensing means and/or also means for applying weight to the weight sensing means. Said weighing instruments of the system can also be considered to include such means functionally included therein, which have a function of converting weighing results and information received from the weight sensing means to a mode preferred in terms of transmitting the same within a data network along said signal communication link based on electromagnetic phenomena. The weighing instruments can also be considered to include various means for transferring and/or otherwise setting weighing-bound objects with regard to weighing functions for weighing said objects. One notable example of the latter is a sample changer. In addition, the weighing instruments can be considered to comprise calibrating instruments intended for sustaining the functions of a scales and/or a like weighing arrangement included in the system, and/or means intended for the neutralization of an electric charge. The weighing instruments can be further considered to comprise means necessary for controlling the above means, one noteworthy example of which is a processor. The weighing instruments can also be considered to include software means used for sustaining functions included in the weighing system. These means can also be used for example for processing a response and/or for producing as well as shaping a piece of weighing information.

The invention relates also to a method for processing a piece of weighing information created by means of a weighing arrangement included in the weighing system. In the method according to the invention, the weighing results produced by a weighing arrangement are used for creating a piece of weighing information, which is converted into a mode capable of being transmitted and/or received by transceiver means included in the weighing system and in communication with a given data network. The piece of weighing information is received and most preferably recorded in a memory, for example for creating a response to be transmitted to the weighing system. The response can be used for example for controlling means included in the weighing arrangement.

The above description deals in general sense with preferred embodiments of the invention. In the following more detailed specification for preferred embodiments of the invention, reference is made to the accompanying drawings, in which
- fig. 1: shows a diagram for a weighing system according to one embodiment of the invention,
- fig. 2: illustrates partially wired-network based systems according to a few exemplary embodiments of the invention,
- fig. 3: illustrates systems according to a few exemplary embodiments of the invention, which are based on at least partially wireless data network,
- fig. 4A: shows a diagram for a method according to one embodiment of the invention for communicating a piece of weighing information to a data network,
- fig. 4B: shows a diagram for a method according to one embodiment of the invention for communicating a response for a piece of weighing information by means of a data network,
- fig. 5A: shows a diagram for a weighing arrangement according to one embodiment of the invention, and
- fig. 5B: shows a diagram for another weighing arrangement according to one embodiment of the invention.

### Embodiments of the invention are set forth in the dependent claims.

In the following specification, the weight sensing instruments refer to such means of a weighing arrangement, from which is received a piece of information and/or a signal used for concluding the mass of a presently weighed body. In the simplest form thereof, these instruments may comprise for example a mechanical arrangement, but also an arrangement including even highly sophisticated electronics and/or optical components, and/or software means for producing for example a weight-dependent signal and/or various correction factors in a weighing result.

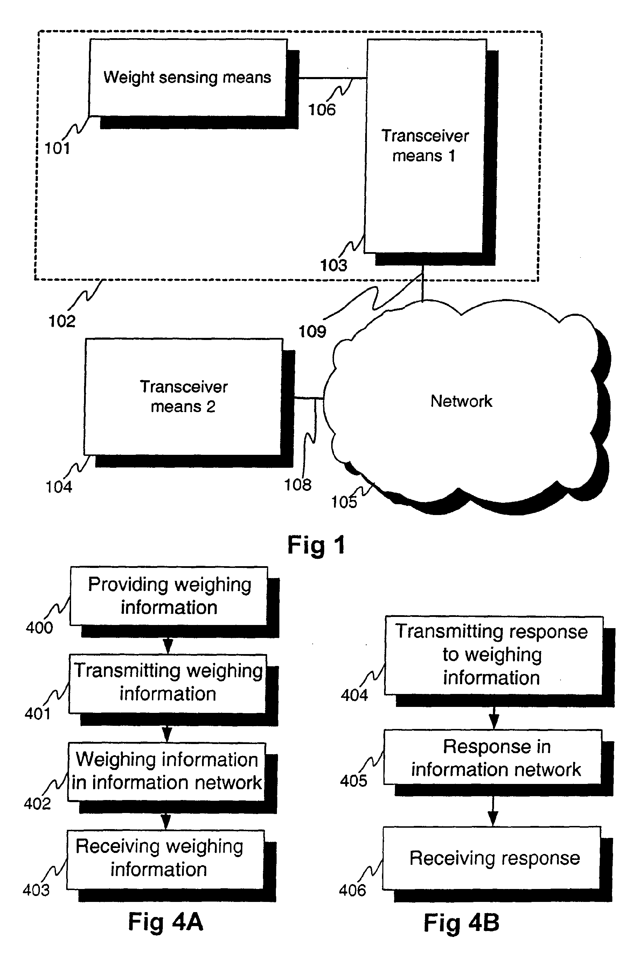

Fig. 1 depicts an illustrative diagram for a weighing system according to a principle of the invention, wherein a weighing arrangement 102 is used for producing weighing information based on weighing results and communicated forward by way of a data network 105. The weighing information comprises at least one weighing result, but most preferably also other information about what is being weighed and/or essentially involved in weighing. In view of sensing the weight, the weighing arrangement 102 employs weight sensing instruments 101 which are most preferably electromechanical, comprising both mechanical and electrical components.

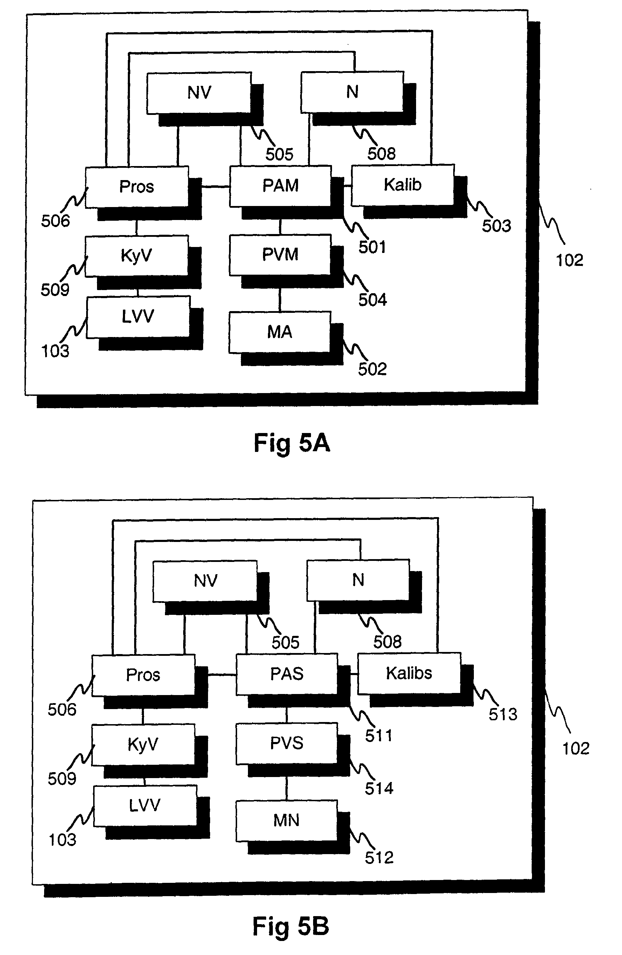

The scales refers to such an appliance and/or weighing arrangement 102 which comprises at least the weight sensing instruments 101. The inventive scales may comprise also other functional components, peripherals, as illustrated for example in reference to figs. 5A and 5B. The peripherals can be considered to include for example calibrating instruments, an electric decharger, in some cases even a sample changer and/or the like, as well as linking means 106 for the communication of weighing information between the weight sensing instruments 101 and other means 103 of the weighing arrangement. The scales is considered to include also various electromechanical converters for converting the presentation mode of a weighing result from one mode to another between mechanical and/or electrical, as well as a display unit fixedly mounted in connection with the scales.
Fig. 1 has also drawn therein transceiver means 1 103, which are functionally connected by way of the linking means 106 with the weight sensing instruments 101 included in the weighing arrangement. On the other hand, the transceiver means 1 103 are connected functionally to the data network 105 by means of means 109 intended for linking. The transceiver means 1 103 have a function of transferring information between one section of the weighing arrangement 102 and the data network 105. The information to be transferred or communicated comprises weighing information and/or other related information from the scales towards the network and/or from the network towards the scales, as a response to the weighing information. The response comprises for example operating instructions and/or control data for example for controlling means included in the weighing arrangement and/or the weight sensing instruments 101 as well as peripherals possibly included therein.

The network 105 may be as extensive as possible, for example Internet-based (also Intranet) and/or WAP-based in its sections applicable thereto. In its applicable sections, the network 105 may be based on a radio cellular system. It is also possible that the network 105 be composed of more extensive and local sections, which enables the communication of data also over a long-range net, for example over the Internet, to a location far away in geographical sense. Thus, it is possible to employ, between devices communicating in the local section of a net, for example a data transfer based on the wireless expansion of a cellular radio system, communication based on a magnetic data transfer, and/or some other mode of data transfer applicable to short-range communication. A notable additional example of this comprises Bluetooth-, IR- and/or ultrasound-based applications for enabling communication between individual devices. Short range is a term indicating that the short-range devices have a transmission range which is for example several dozen meters. Communication of data can take place in network sections either in parallel and/or in series, the function of various sections of a network being organized as independently as possible.

In a short-range network, the weighing system and for example a mobile communicator and/or a portable computer communicate with each other. The mobile communicator and/or the portable computer transmit the data forward for example over the Internet and, thus, for example a computer, which logs weighing data in a centralized manner and which is connected to the Internet, receives the weighing data. The invention is not limited to a particular information network.

The system of fig. 1 comprises also transceiver means 2 104, the function of which is to receive weighing information arriving from the network 105 and/or other information associated therewith. Said information may contain for example data relating to imminent changes regarding the calibration, authenticity, addresses and/or certain correction factors of a particular section in a weighing arrangement. The transceiver means 2 104 are connected to the network 105 by way of linking means 108 designed for the purpose and enabling a functional transfer of data. In addition, the transceiver means 104 can be used for transmitting information over the network to the weighing arrangement 102 in response to weighing information supplied by the latter. In the system of fig. 1, the nature of communication can be such that it proceeds along a wired network and/or in a wireless fashion. Most preferably, communication is based on the use of signals forwarded by means of electromagnetic phenomena. Acoustic, ultrasound-based communication over short ranges may also be feasible in a wireless section of the network. There is no desire to limit the invention to a wired network and/or a wireless network over particular sections thereof.

It should be appreciated that, in one embodiment of the invention, the transceiver means 1 103 and 2 104 may consist of means which only possess either one of the functions, a transmission function or a reception function. Thus, for example, the weighing arrangement need no control from an information network. The recording end, for example, may also be provided with just a data logger type of arrangement for gathering information without supplying the data network with a response.

The weighing system according to one embodiment of the invention can be used, for example, for monitoring or tracking the weight of a person over the Internet. Thus, a person is weighed by means of a scales 102, which is included in the weighing system and which is in communication with the Internet 105 by way of a terminal 103. The weighing system is also provided with another Internet-linked section 104 for receiving the weighing results. Hence, appropriate memory and/or database facilities can be used for logging, statistically recording, and comparing the weighing results even on a worldwide basis. As a result, people who are members of such a reference group can use the weighing system in order to receive real-time feedback in the form of a response regarding weight development, as well as information about progress made by other members of the group. In addition, the weighing data, as transmitted by the weighing system according to such embodiment of the invention, are in a certain sense more reliable than the results logged by the person him- or herself.

The system includes a terminal 209, 309 which can be for example a mobile communicator 309 which is functionally connected with the scales for example by way of an ultrasonic signal, an infrared signal, a communication link based on a cellular radio system and/or an expansion thereof. The terminal could also be an Internet terminal, a WAP mobile communicator, or a computer which is connected to the Internet. A particular section of the system further includes memory facilities and most preferably database facilities, by means of which it is possible for a party operating the system to analyze particular weighing results and other material of said database related to such results.

The weighing system has also facilities for establishing a response. The response can be a real-time feedback to a particular person, comprising from example individualized information about aspects relating to the development of his or her weight in relation to other members of the group. The response may also be a dietary recommendation, the observance of which results in the achievement of a particular weight over a certain period of time with a person's physiological reservations, which may comprise information and/or reference values characteristic of general health, age, height, gender, lack of exercise, or some other feature of a body relevant in terms of weight management. The response can be delivered to a particular person by way of e-mail, as a text message or some other message applicable from the viewpoint of a presently employed information network.

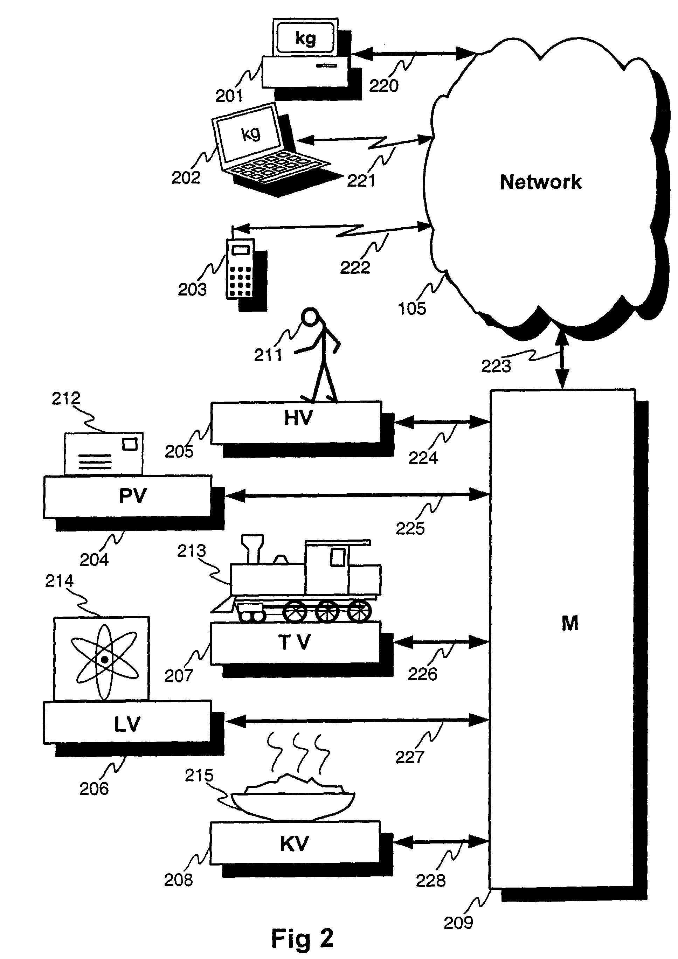

The invention is not limited to a data-network based system applicable exclusively to the weighing of persons. Indeed, fig. 2 illustrates embodiments of the invention for use as a weighing system with communication occurring mainly over a wired network. Fig. 2 depicts a modem M 209. Hereinafter, the modem refers to any device which functions as a link at an interface between some specific appliance and an information network, without being limited to any particular implementation of information network. The modem is considered to comprise particularly network and linking boards operating in the above capacity.

Fig. 2 shows several systems functional in a variety of weighing conditions. It should be appreciated that, in a major industrial facility, all these can integrate in a single weighing system, if desirable. In one embodiment of the invention, the modem M 209 is used for connecting a weighing arrangement 204, 205, 206, 207, 208 by way of linking means 223 with an information network 105. Fig.2 depicts a weighing system for weighing a person 211 by means of an appropriate weighing arrangement HV 205, which is provided with a link 224 for a two-way transfer of data between the weighing arrangement 205 and the modem 209. The arrangement 205 of fig. 2 includes a personal scales, from which the weighing information is communicated by way of the modem M 209 to the information network 105, 209 and thence further for example to a computer 201, which manages weighing information logged in the system by way of the network 105, preferably for example by means of database facilities.

Along with weighing information to be communicated, it is also possible to transfer information regarding the identity of a person being weighed, as well as other information, for example about vital functions. As a response to information transmitted from the weighing arrangement 205 over the network 105 to the computer 201, the latter can send a mere acknowledgement about the reception of weighing information. The response can also be more informative. The response may contain information about a person's prior weight measurements, comprising a series of weighing information over a particular time frame for monitoring weight development. The response may also be some other, for example a statistical piece of information about the rank of a person 211 in a reference group and/or some other community, which has been evaluated for statistical characteristics to represent its particular weight of the community and/or its development. The response can also be for example a dietary recommendation for the following week for example in groups associated with weight monitoring and including the person 211 as a member. For example, in medical clinics and infant care centers, where a lot of people are being weighed, it is possible to use a system as described above for implementing an individualized weight management program. The response may also comprise logging weighing information and/or a piece thereof in a memory, for example in a database.

The above described system can also be applied to the weighing of cattle and other animals. In this case, the response may relate for example to the dosage of cattle feed and/or to sorting out animals to be slaughtered.

The information network 105 can also be sued for transmitting weighing information in a wireless mode, for example along a link 221 established by way of a radio modem to a portable computer 202, which in other respects is functionally essentially consistent with the computer 201 with regard to the management of weighing information and the establishment of a response.

The weighing information can also be communicated along a link 222 established by way of the information network 105 for example directly to a mobile communicator 203, which can function as a local display for a weighing result and/or information. The mobile communicator 203 is also capable of receiving a message coming from the computer 201, 202. Thus, provided that the mobile communicator 203 is within the grasp of the person 211, he or she shall find out both a weighing result and information to be transmitted as a response thereto.

Fig. 2 depicts also a system according to another embodiment of the invention, comprising a weighing arrangement PV 204 for weighing an item of mail 212. The weighing information is communicated along a link 225 to the modem M 209 and to be transmitted further over the information network 105 for further processing, as described above. As a response to weighing information in this system, a signal can be transmitted to grading equipment functioning along with the weighing arrangement 204 for sorting the mail. On the basis of what is described in the invention, it is obvious for a skilled person that said example applies also to other similar functions, in which an object to be weighed is classified on the basis of its weight, one example comprising relevant applications relating to assembly line automation.

Fig. 2 also depicts a system according to yet another embodiment of the invention, comprising a weighing arrangement 207 for weighing a heavy-duty piece of equipment, for example a railway engine or locomotive 213. In this case, the weighing can be performed by means of a specially applied arrangement, from which the weighing information is communicated along a data link 226 to the modem M 209 for further transmission over the information network 105. As a response to weighing information, for example the computer 201 transmits information over the network 105 to a mechanism, included in the weighing arrangement 207 and controlling a loading and/or unloading operation, for controlling the same.

Fig. 2 illustrates one laboratory-compatible system according to one embodiment of the invention, comprising a weighing arrangement LV 206 for mass assignments taking place in a laboratory, for example for minute quantities of material 214. In this case, the weighing information is communicated along a link 227 to the modem M 209 and thence further along a line analogous to what has been described above forward to the computer 201, 202. This establishes a response and transmits it along a link 220, 221, 223, 227 to the weighing arrangement LV 206. The response may comprise for example a control signal to an electrical decharger included in said weighing arrangement 206, to a sample changer, and/or it can be a calibration command. The response may also comprise logging in memory of information determined on the basis of a weighing result.

Fig. 2 depicts also a system applicable for example to the weighing of foodstuffs, comprising a weighing arrangement KV 208. The arrangement 208 comprises means for example for implementing a kitchen scales. The kitchen may refer to a typical small household kitchen, but just as well as to a large industrial-scale kitchen. The weighing information. which is thus transmitted from the weighing arrangement 208 to the modem M 209 and further over the network 105 to the computer 201 for establishing a response, is used as a basis for controlling material flows in one kitchen process, for example, even in relation to the preparation of crisp hard bread. The material flows to be controlled or managed do not limit the invention as such. The process can be related to food industry, but processes of chemical industry are also feasible. Thus, in addition to the storing and/or statistical logging of weighing information, the response comprises for example instructions for the dosage of a presently weighed material. The response is sent along a link 220, 223, 228 to dispensing devices included for example in the weighing arrangement KV 208. The weighing information and/or the response can also be used for controlling particular logistics associated with the process.

In all exemplary systems illustrated in fig. 2, the response and the weighing information itself can also be communicated to the portable computer 202 and/or the mobile communicator 203. In addition, both the response and the weighing information can be transmitted over the information network 105 to a plurality of mobile communicators and/or computers.

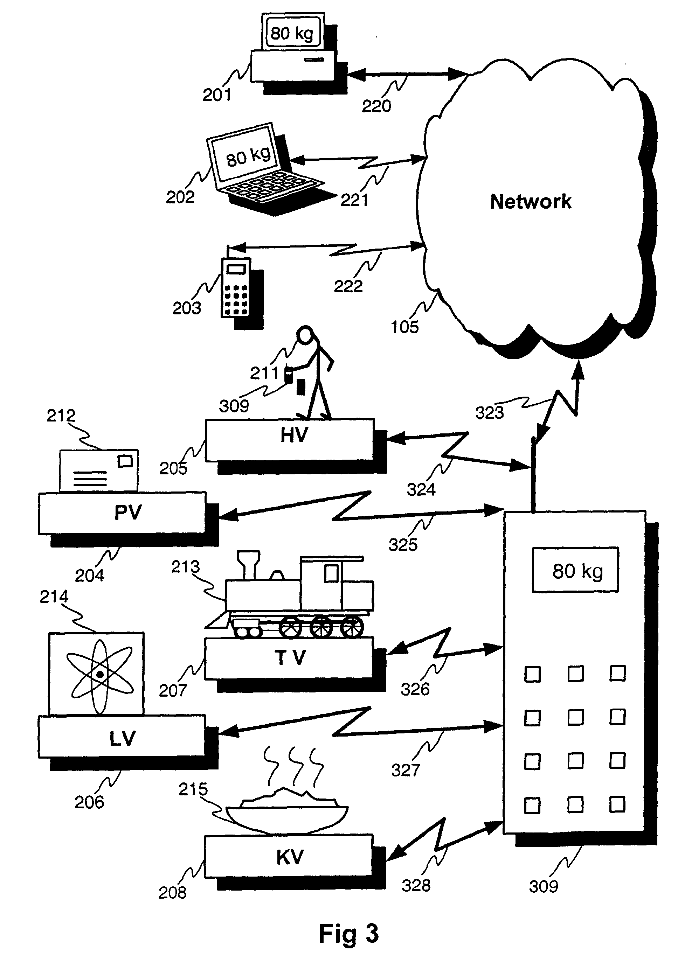

Fig. 3 shows an example of a weighing system implemented in a substantially wireless configuration and demonstrated by the examples of fig. 2. The difference from what is shown in fig. 2 is that communication in fig. 3 from the weighing arrangements of various systems to the information network 105 takes place for example by way of a mobile communicator 309 over wireless links 323, 324, 325, 326, 327 and 328. Regarding the contents thereof, the communication links 323, 324, 325, 326, 327 and 328 in fig. 3 are consistent with the links 223, 224, 225, 226, 227 and 228 of fig. 2, respectively. At the same time, it is obvious that said links involve certain special features resulting from the mode of communication, which lead to minor differences between wired and wireless versions in detailed implementations of the respective embodiments of the invention. It should further be noted that, within the perimeter of an industrial facility, for example, it may be advantageous to make use of a base station or some other similar link as the section 309 of a wireless network for implementing communication between a weighing arrangement 204, 205, 206, 207 and 208 and the information network 105. A modem in the wired network 209 and the mobile communicator 309 in a wireless network can also be replaced with some other interface or linking device for connecting a weighing arrangement to an information network. Wireless sections and wired sections of a network can be utilized in a common system without becoming limited to a particular wired or wireless type.

Fig. 4A illustrates a diagram for a method associated with a system according to one embodiment of the invention, which first involves the use of a weighing result and certain available facts about whatever is being weighed for establishing 400 weighing information, which is transmitted by means of certain first transmitter means included in the transceiver means (103 fig. 1) to the information network (105 fig. 1) to be forwarded 402 thereby, and in which method said weighing result is received 403 by means of certain first receiver means included in the transceiver means (104 fig. 1). Thus, the weighing information comprises at least the actual weighing result, but most preferably also other information about whatever is being weighed.

Fig. 4B illustrates a diagram for a method associated with a system according to one embodiment of the invention, which comprises transmitting 404 a response by means of certain transmitter means included in one set of transceiver means (104 fig. 1) to the information network (105 fig. 1) to be forwarded 405 thereby, and in which method said response is received 406 by means of certain receiver means included in the other set of transceiver means (103 fig. 1). Thus, the response comprises at least an acknowledgement confirming receipt of the weighing information, but most preferably other information as well. The latter could comprise data, commands for establishing a control signal, operating instructions and/or statistical data, for example in relation to the weighing of a product or a person.

In should be appreciated that the first transceiver means and/or the second transceiver means can be integrated together by using transmitter means and receiver means, or those may also be physically separated from each other.

Fig. 5A illustrates in more detail one example of a weighing arrangement 102 according to one embodiment of the invention, comprising a mechanical weight sensing means PAM 501 for providing a weighing result, a mass scale MA 502, calibrating means Kalib 503, and a mechanism PVM 504 for updating the mass scale with a mass value consistent with a weight sensed by the weight sensing means.

Fig. 5B illustrates in more detail one example of a weighing arrangement 102 according to one embodiment of the invention, comprising an electrical weight sensing means PAS 511 for providing a weighing result, a display MN 512, calibrating means Kalibs 513, means for updating the display PVS 514 with a mass value consistent with a weight sensed by the weight sensing means.

The weighing arrangements shown in figs. 5A and 5B can be additionally provided with a sample changer NV 505, a processor Pros 506, for example for providing weighing information and/or for controlling section means included in the weighing arrangement on the basis of a response. The weighing arrangement may also include a neutralizer N 508, which has a function of relieving a presently weighed, very lightweight body of such a static electrical charge which would affect a weighing result. The weighing arrangement 102 is further provided with means KyV 509, whereby the weighing arrangement 102 can be connected to transceiver means LVV 103 to be linked with an information network.

It should further be appreciated that the present specification deals with weighing performed on the Earth and its transmission by way of an information network. However, the invention does not exclude exploitation of the system in space technology as well, for example in artificial gravity and on other celestial bodies; for example in weighing equipment launched with space probes, as long as the appropriate correction factors, for example with regard to acceleration of free fall, are taken into consideration either in a weighing-information producing weighing arrangement itself and/or in an information-receiving end of the system.

## Claims

1. An information-network aided weighing system, comprising a weighing arrangement (102) and weight sensing means (101) therein for providing weighing results, **characterized in that** the system includes
- first transceiver means (103) in a first section of the weighing system,
- second transceiver means (104) in a second section of the weighing system,
whereby
- said weight sensing means (101) are linked with said first transceiver means (103),
- said first transceiver means (103) are linked with an information network (105) for transmitting weighing results and
- said second transceiver means (104) are linked with the information-network (105) for receiving the transmitted weighing results and
- the information-network (105) is implemented with a help of one in the following list:
-- Internet-based information network,
-- wap-based information network and
-- cellular radio system based information network.

2. A weighing system as set forth in claim 1, **characterized in that** it further comprises memory facilities for recording the weighing results.

3. A weighing system as set forth in claim 2, **characterized in that** it comprises database facilities for managing the weighing results.

4. A weighing system as set forth in claim 1, **characterized in that** some of said transceiver means (103, 104) are adapted to be functionally connected for a two-way communication link by way of an information network.

5. A weighing system as set forth in claim 4, **characterized in that** some of said transceiver means (103, 104) are adapted to be functionally connected for a communication link by way of a cellular radio system.

6. A weighing system as set forth in claim 5, **characterized in that** said communication link is provided by means of short message communication of a cellular radio system.

7. A weighing system as set forth in claim 1, **characterized in that** some of said transceiver means (103, 104) are adapted to be functionally connected for a communication link by way of an infrared signal.

8. A weighing system as set forth in claim 1, **characterized in that** some of said transceiver means (103, 104) are adapted to be functionally connected for a communication link by way of an ultrasonic signal.

9. A weighing system as set forth in claim 1, **characterized in that** some of said transceiver means (103, 104) are adapted to be functionally connected for a communication link by way of a network using a cable-carried signal for data transfer.

10. A weighing system as set forth in claim 1, **characterized in that** said transceiver means have some transmitter means thereof included in a mobile communicator (203).

11. A weighing system as set forth in claim 1, **characterized in that** said transceiver means have some receiver means thereof included in a mobile communicator (203).

12. A method for processing weighing information in an information-network aided weighing system, **characterized in that** the method comprises steps of
- providing weighing information (400), which is also converted to a mode processible with transmitter means,
- transmitting the weighing information (400) to an information network (105),
- receiving the weighing information (400) from the information network (105),
- logging the weighing information in memory,
wherein said weighing information is sent (401) and/or received (403) from such an information-network (105), which is implemented with a help of one in the following list:
- Internet-based information network,
- wap-based information network and
- cellular radio system based information network.

13. A method as set forth in claim 12, **characterized in that**, in acknowledgement of the receipt of weighing information, there is further transmitted a response (404) over a particular information network (105) to the weighing arrangement (102) for controlling certain means included therein.

14. A method as set forth in claim 12, **characterized in that** the weighing arrangement is controlled by means of a two-way communication between certain first and second transceiver means (103, 104).

15. A weighing arrangement (102) for weighing a body to be weighed, said weighing arrangement (102) comprising weight sensing means (501, 511), a display (502, 512), means for updating (504, 514) the display, calibrating means (503, 513), and a processor (506), **characterized in that** it is provided with linking means (509) for connecting a particular section of the weighing arrangement (102) with transceiver means (103) to be linked with an information network (105), which is implemented with a help of one in the following list:
- Internet-based information network,
- wap-based information network and
- cellular radio system based information network.

16. A weighing arrangement (102) as set forth in claim 15, **characterized in that** it is provided with a peripheral device (503, 505, 508, 513) capable of being controlled on the basis of a response received from a communication network.

17. A weighing arrangement (102) as set forth in claim 16, **characterized in that** said peripheral device comprises a sample changer (505).

18. A weighing arrangement (102) as set forth in claim 16, **characterized in that** said peripheral device comprises calibrating means (503, 513).

19. A weighing arrangement as set forth in claim 15, **characterized in that** weight sensing means (501, 511) comprise a personal scales.

20. A weighing arrangement (102) as set forth in claim 19, **characterized in that** a received response, to weighing information sent by a weighing master with the help of transceiver means (103) into the information network (105), comprise information from information network (105) on the weight of whatever being weighed and/or its ranking in a reference group.

21. A weighing arrangement as set forth in claim 15, **characterized in that** weight sensing means (501, 511) comprise industrial scales.

22. A weighing arrangement as set forth in claim 21, **characterized in that** said industrial scales is arranged for monitoring of a mass flow of a material in an industrial process.
